# EUROPÄISCHE PATENTSCHRIFT

(11) **EP 2 156 727 B1**
(45) Veröffentlichungstag und Bekanntmachung des Hinweises auf die Patenterteilung: **11.07.2012**
(21) Anmeldenummer: 09161491.7
(22) Anmeldetag: 29.05.2009
(51) Int. Cl.: A01F 12/44

(54) **Mähdrescher**
Combine harvester
Moissonneuse-batteuse

(30) Priorität: 19.08.2008 DE 102008038183
(43) Veröffentlichungstag der Anmeldung: 24.02.2010
(73) Patentinhaber: CLAAS Selbstfahrende Erntemaschinen GmbH, 33428 Harsewinkel (DE)
(72) Erfinder: Van de Sluis, Jan, 33428, Harsewinkel (DE); Hay, Jonas, 33790, D-Halle/Westf. (DE); Wittkamp, Heinrich, 48336, Sassenberg (DE)

(56) Entgegenhaltungen:
- EP-A1- 0 850 556
- EP-A1- 0 898 875
- DE-B- 1 286 325
- GB-A- 2 055 540
- US-A- 3 108 064

## Beschreibung

Die vorliegende Erfindung betrifft einen Mähdrescher und in diesem insbesondere die Verteilung von gedroschenem, nachzureinigendem Erntegut auf einem Förderboden des Mähdreschers.

Aus der EP 0 898 875 A1 ist eine landwirtschaftliche Erntemaschine mit einem einer Reinigungsvorrichtung vorgelagerten oszillierend angetriebener Förderboden zur Aufnahme von Erntegut bekannt, der eine einen Strom des Ernteguts quer zu einer mittleren Förderrichtung des Ernteguts auf dem Förderboden auseinander lenkende Oberflächenstruktur aufweist. Zur Vergleichmäßigung des von dem Förderboden aufgenommenen Erntegutes weist dieser einen Abschnitt auf, der in seitlicher Richtung geneigt ist, um eine seitwärts gerichtete Bewegung des Erntegutes während der Förderung zu erreichen.

Aus DE 697 09 534 T2 ist ein Mähdrescher mit einem Dreschabschnitt in Form einer Trommel mit in Längsrichtung des Mähdreschers orientierter Welle und einem unter dem Dreschabschnitt angeordneten, aus dem Erntegut gedroschenes Korn auffangenden Vorlaufboden bekannt. Die Längsausrichtung der Trommel hat zur Folge, dass mehr Korn auf linke und rechte Randbereiche des Vorlaufbodens fällt als in deren Mitte. Grund hierfür sind zum einen aufgrund der Drehung der Trommel auf das Erntegut einwirkende Fliehkräfte, die dazu führen, dass Erntegut nach Passieren einer Öffnung eines die Trommel in einem unteren Bereich ihres Umfangs umgebenden Dreschkorbes in der Regel nicht vertikal herab fällt, sondern eine Geschwindigkeitskomponente in Querrichtung, fort von der Trommelachse, hat, und zum anderen, dass aufgrund der Krümmung der Trommel Erntegut, das stark geneigte Bereiche des Dreschkorbes passiert, sich auf einer kleineren Fläche des Vorlaufbodens konzentriert als solches, welches einen im Wesentlichen horizontalen Wandbereich des Dreschkorbs, über der Mitte des Vorlaufbodens, passiert.

Wenn das Erntegut mit einer solchen in Querrichtung ungleichmäßigen Verteilung einer Reinigungsstufe zugeführt wird, kann der Fall auftreten, dass die Nachreinigungsstufe in Höhe der Mitte des Vorlaufbodens unvollständig ausgelastet, in Höhe seiner Ränder aber überlastet ist. Ein schlechtes Reinigungsergebnis oder hoher Kornverlust sind die Folge. Um diesem Problem zu begegnen, wird in der oben zitierten Schrift vorgeschlagen, Randbereiche des Vorlaufbodens zur Mitte hin abschüssig zu gestalten, sodass Erntegut während des Transports auf dem Vorlaufboden dazu neigt, von den Randbereichen zur Mitte hin zu wandern. Diese Maßnahme ist jedoch unwirksam, wenn sich der Mähdrescher auf in Querrichtung abschüssigem Untergrund bewegt. Zum einen kann diese bekannte Konstruktion einen Seitwärtsdrall des auf den Vorlaufboden herab fallenden Ernteguts bei Schrägstellung des Mähdreschers nicht verhindern, zum anderen verliert gerade auf derjenigen Seite, die in Folge der Schrägstellung stärker mit Erntegut beaufschlagt wird, die Neigung des Vorlaufbodens an Wirksamkeit, da sich die Orientierung dieses Randbereichs der Horizontalen nähert, mit der Folge, dass das Erntegut, das auf diesen Randbereich fällt, nicht mehr zur Mitte hin abgelenkt wird, sondern umgekehrt Erntegut, welches auf den mittleren Bereich des Vorlaufbodens fällt, dazu neigt, zu der ohnehin stark mit Erntegut beaufschlagten Seite hinüber zu wandern.

Auch die Eigenschaften des Erntguts selber haben einen erheblichen Einfluss auf die Verteilung des Ernteguts auf dem Vorlaufboden. Das Dreschen des Ernteguts findet auf dem gesamten Umfang der Trommel statt, aber nur entlang der dem Dreschkorb zugewandten unteren Hälfte der Trommel kann das ausgedroschene Material den Dreschabschnitt verlassen. Wenn das Erntegut trocken und leicht zu dreschen ist, dann passiert eine große Menge Materials den Dreschkorb unmittelbar wenn es um die obere Hälfte der Dreschtrommel gefördert worden ist und den Rand des Dreschkorbs erreicht, und die Verteilung des Ernteguts auf dem Förderboden ist stark zu einer Seite verschoben. Eine schnelle Drehung der Dreschtrommel fördert eine Ungleichverteilung zur entgegengesetzten Seite.

Aufgabe der vorliegenden Erfindung ist, einen Mähdrescher anzugeben, der eine gleichmäßige Verteilung von einer Reinigungseinrichtung zugeführtem Erntegut mit einfachen Mitteln auch bei wechselnden Betriebsbedingungen gewährleisten kann.

Die Aufgabe wird gelöst, indem bei einem Mähdrescher mit einem einer Reinigungseinrichtung vorgelagerten Förderboden für Erntegut und einer einen Strom des Ernteguts quer zu einer mittleren Förderrichtung des Ernteguts auf dem Förderboden auseinander lenkenden Oberflächenstruktur Mittel zum Bündeln des auf die auseinander lenkende Struktur geführten Stroms auf einen Bruchteil der Breite der auseinander lenkenden Struktur stromaufwärts von der Struktur auf dem Förderboden vorgesehen sind. Durch die Aufeinanderfolge von Bündeln und Auseinanderlenken geht jegliche Ungleichverteilung des auf den stromaufwärtigen Abschnitt fallenden Ernteguts verloren und hat keinen Einfluss mehr auf die beim Auseinanderlenken resultierende Verteilung. Unter einer mittleren Förderrichtung kann allgemein die Richtung des mittleren Impulses der Teilchen des Erntegutstroms, gemittelt über dessen Querschnitt hinweg, verstanden werden. Im Falle einer spiegelsymmetrischen Verteilung des Stroms liegt die mittlere Förderrichtung immer in der Symmetrieebene.

Einer ersten Ausgestaltung der Erfindung zufolge sind die Mittel zum Bündeln in einem bezogen auf die Förderrichtung des Ernteguts stromaufwärtigen Abschnitt des Förderbodens selbst vorgesehen, und die auseinander lenkende Struktur ist auf einem stromabwärtigen Abschnitt des Förderbodens angeordnet.

Um den Strom des Ernteguts vom stromaufwärtigen Abschnitt auf eine wohl definierte Breite zu bündeln, können als bündelnde Oberflächenstruktur in Förderrichtung konvergierende Rippen vorgesehen sein.

Des Weiteren kann die bündelnde Oberflächenstruktur zwei zur Mitte des Förderbodens und in der mittleren Förderrichtung abschüssige Oberflächenbereiche des stromaufwärtigen Abschnitts umfassen.

Alternativ oder ergänzend kann die bündelnde Oberflächenstruktur zwei zur Mitte des Förderbodens abschüssige erste Oberflächenbereiche des stromaufwärtigen Abschnitts umfassen. Diese können in Förderrichtung abschüssig sein, um die Bewegung des Ernteguts auf dem Förderboden zu begünstigen; eine geeignete Oberflächengestaltung, insbesondere eine Riffelung quer zur mittleren Förderrichtung ermöglicht aber auch eine Berganförderung von Erntegut.

Die aufweitende Oberflächenstruktur kann durch zwei von der Mitte des Förderbodens fort und in der mittleren Förderrichtung abschüssige erste Oberflächenbereiche des stromabwärtigen Abschnitts gebildet sein.

Einer zweiten Ausgestaltung zufolge umfassen die Mittel zum Bündeln eine quer zu der mittleren Förderrichtung ausgerichtete Schnecke.

Um das Erntegut schell und mit geringem Aufwand an Antriebsleistung bündeln zu können, weist die Schnecke vorzugsweise zwei Abschnitte mit jeweils gegensinniger Steigung auf. Diese Abschnitte führen Erntegut jeweils aus zwei entgegengesetzten Richtungen mittig zusammen. Jeder Abschnitt hat daher weniger als die Hälfte des gesamten Erntegutstroms zu fördern, und die Strecke, über die das Erntegut gefördert werden muss, ist kurz.

Die Schnecke ist vorzugsweise parallel zu einem Rotor ausgerichtet, der das von der Schnecke zusammenzuführende Material - in der Regel in seiner Axialrichtung verteilt - aus einem Erntegutstrom abscheidet.

Die auseinander lenkende Oberflächenstruktur umfasst vorzugsweise zwei von der Mitte des Förderbodens fort abschüssige zweite Oberflächenbereiche. Teile des Erntegutstroms, die von der bündelnden Oberflächenstruktur auf diese zweiten Oberflächenbereiche gelangen, bewegen sich um so weiter auseinander, je weiter sie auf dem Förderboden gefördert werden. Um die Förderung zu begünstigen, können die zweiten Oberflächenbereiche wie oben für die ersten erläutert abschüssig und/oder geriffelt sein.

Um die Unabhängigkeit der Wirkung dieser zweiten Oberflächenabschnitte von einer Schrägstellung des Mähdreschers zu verbessern, sind diese vorzugsweise in Querrichtung des Mähdreschers stärker geneigt als, wenn vorhanden, die zwei ersten Oberflächenbereiche des stromaufwärtigen Abschnitts. Eine starke Neigung der zweiten Oberflächenabschnitte in Querrichtung ist aber auch beim Betrieb des Mähdreschers auf ebenem Untergrund zweckmäßig, um eine starke Aufweitung des Erntegutstroms auf einem kurzen Förderweg zu erzielen.

Die zwei zweiten Oberflächenbereiche können flankiert sein von zu der Mitte des Förderbodens hin und eventuell auch in Förderrichtung abschüssigen dritten Oberflächenbereichen. Dies ist vor allem dann zweckmäßig, wenn auch der stromabwärtige Abschnitt des Förderbodens herab fallendem Erntegut ausgesetzt ist, das über diese dritten Oberflächenbereiche zur Mitte hin abgelenkt wird.

An einem stromabwärtigen Rand des Förderbodens kann wenigstens ein Vorsprung in Verlängerung einer Grenze zwischen zwei zueinander hin abschüssigen Oberflächenbereichen vorgesehen sein. Ein solcher Vorsprung ist wirksam, um einen möglicherweise in Höhe der Grenze zu stark verdichteten Erntegutstrom wieder aufzulockern.

Die auseinander lenkende Oberflächenstruktur kann in mehrere stromteilende Unterstrukturen unterteilt sein, von denen eine erste den gebündelten Strom in Teilströme aufteilt und jede weitere einen ihr zugeführten Teilstrom abermals aufteilt. So kann auf einer kurzen Strecke eine Vielzahl von über die Breite des Förderbodens verteilten Teilströmen erhalten werden. Auch wenn die Breite jedes einzelnen so erhaltenen Teilstroms gering sein sollte, kann eine gleichmäßige Verteilung des Ernteguts über die Breite der Reinigungseinrichtung hinweg erzielt werden, wenn die Zahl der Teilströme groß genug ist.

Einer bevorzugten Ausgestaltung zur Folge können drei solche Unterstrukturen unterschieden werden, wobei die erste durch die zwei inneren Oberflächenbereiche des stromabwärtigen Abschnitts und die beiden anderen durch Vorsprünge an einem stromabwärtigen Rand des Förderbodens gebildet sind, die jeweils in Verlängerung einer Grenze zwischen zueinander hin abschüssigen Oberflächenbereichen vorgesehen sind. Diese Vorsprünge können einer übermäßigen Verdichtung des Erntegutflusses in Höhe dieser Grenze entgegen wirken.

Besonders vorteilhaft anwendbar ist der oben beschriebene Förderboden in Verbindung mit einem einzelnen in Fahrzeuglängsrichtung ausgerichteten Abscheiderotor, da er die mit dieser Konstruktion verbundene Ungleichverteilung des Ernteguts wirksam ausgleicht. Der Förderboden ist aber auch als Vorbereitungsboden an einem Dreschkorb geeignet, insbesondere dann, wenn die Drescheinheit als Axialdrescheinheit ausgebildet ist.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: einen schematischen Schnitt durch einen Mähdrescher gemäß der vorliegenden Erfin- dung;
- Fig. 2: eine perspektivische Ansicht von internen Baugruppen des Mähdreschers;
- Fig. 3: eine perspektivische Ansicht eines erfin- dungsgemäßen Rücklaufbodens;
- Fig. 4: eine perspektivische Ansicht des Rücklauf- bodens gemäß einer zweiten Ausgestaltung;
- Fig. 5: eine Draufsicht auf einen Mähdrescher gemäß einer dritten Ausgestaltung; und
- Fig. 6: einen schematischen partiellen Schnitt durch den Mähdrescher der dritten Ausges- taltung in Fahrzeugquerrichtung.

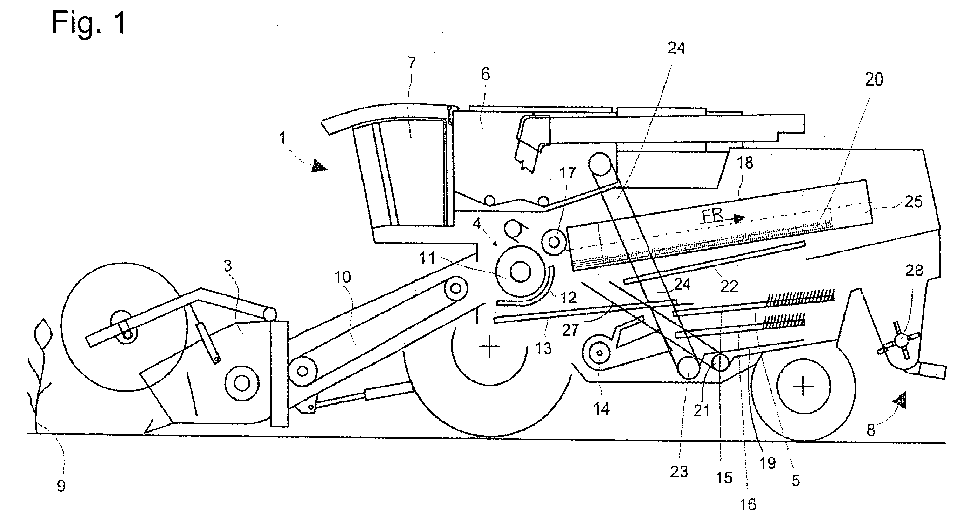

Der in Fig. 1 im Schnitt gezeigte erfindungsgemäße Mähdrescher 1 trägt in seinem Frontbereich ein höhenverstellbares Schneidwerk 3, welches gewachsenes Erntegut 9 auf großer Breite aberntet und in seitlicher Richtung zusammen- und einem Schrägförderorgan 10 zuführt. Über das Schrägförderorgan 10 gelangt das Erntegut in an sich bekannter Weise zu Dreschorganen 4, die in der Darstellung der Fig. 1 eine Dreschtrommel 11, eine dieser nachgeordnete Wendetrommel 17 und einen Dreschkorb 12 umfassen. Durch Öffnungen des Dreschkorbs 12 hindurch wird aus dem Erntegut ein erster im Wesentlichen aus Körnern, Kurzstroh und Spreu bestehender Erntegutstrom abgeschieden und fällt auf einen Vorbereitungsboden 13. Durch Rüttelbewegungen des Vorbereitungsbodens 13 wird der Erntegutstrom darauf nach hinten, in Richtung einer Reinigungseinrichtung 5, gefördert. Der Vorbereitungsboden 13 ist oberflächlich quer geriffelt, um die Förderung des Erntegutstroms in ansteigender Richtung zu erleichtern.

Der nicht durch den Dreschkorb 12 hindurch getretene Teil des Erntegutstroms wird über die Wendetrommel 17 weiter befördert zu einem Axialrotor 18, der sich in Längsrichtung des Mähdreschers 1 über einen großen Teil von dessen Länge erstreckt. Der Axialrotor 18 ist in seinem unteren Bereich von einem halbzylindrischen Sieb 20 umgeben, über das ein zweiter, im Wesentlichen aus Korn und Ährenbruchstücken bestehender Erntegutstrom abgeschieden wird und auf einen Rücklaufboden 22 gelangt.

An Stelle eines einzelnen Axialrotors 25 könnten auch zwei parallele Axialrotoren nebeneinander vorgesehen sein.

Erntegut, im Wesentlichen Stroh, das am rückwärtigen Ende 25 des Axialrotors 18 ausgeworfen wird, gelangt zu einem Verteiler 8 am Heck des Mähdreschers 1, wo es von einem Häcksler 28 zerkleinert und schließlich auf dem Feld verstreut wird.

Auf dem rüttelnd bewegten Rücklaufboden 22 wird der zweite Erntegutstrom vorwärts gefördert und fällt schließlich über eine vordere Kante des Rücklaufbodens 22 auf den Vorbereitungsboden 13, wo er sich mit dem durch den Dreschkorb 12 hindurch getretenen Erntegutstrom vereinigt.

Die Reinigungseinrichtung 5, der der vereinigte Erntegutstrom vom Vorbereitungsboden 13 zugeführt wird, umfasst ein Obersieb 15, ein Untersieb 16 und ein Gebläse 14, das einen über die Siebe 15, 16 streichenden Luftstrom antreibt. Das in dem vom Vorbereitungsboden 13 kommenden Erntegutstrom enthaltene Korn passiert nacheinander die beiden Siebe 15, 16 und erreicht über einen darunter liegenden Boden 19 eine Schneckenfördereinrichtung 23 und einen Elevator 24, der es in einen im Rücken der Fahrerkanzel 7 angeordneten Korntank 6 fördert.

Anteile des Erntegutstroms, die leichter sind als das Korn, werden beim Herabfallen vom Vorbereitungsboden 13 auf das Obersieb 15, vom Obersieb 15 auf das Untersieb 16 oder vom Untersieb 16 auf den Boden 19 vom Luftstrom des Gebläses 14 erfasst und mitgerissen, erreichen den Verteiler 8 und werden über diesen ausgeschieden. Schwere, gröbere Anteile gelangen über eine Überkehr am rückwärtigen Ende der Siebe 15, 16 in einen unterhalb der Siebe quer verlaufenden Graben. Eine in dem Graben rotierende Schnecke 21 räumt das Material seitwärts, zu einem zweiten Elevator 27, der es zurück zu den Dreschorganen 4 befördert.

Die Effektivität, mit der die leichten Bestandteile beim Herabfallen vom Korn getrennt werden, hängt ab von der Dichte des Erntegutstroms und ist bei gegebenem Durchsatz um so besser, je gleichmäßiger der Erntegutstrom über die Breite des Vorbereitungsbodens 13 bzw. der Siebe 15, 16 der Reinigungseinrichtung 5 verteilt ist. In einem stromaufwärtigen Bereich des Rücklaufbodens 22 ist der Erntegutstrom über die Breite des Bodens hinweg nicht gleichmäßig verteilt, sondern er liegt an den seitlichen Rändern des Rücklaufbodens 22, unterhalb stark geneigter Bereiche der Mantelfläche des Siebes 20 des Axialrotors 18, dichter als in der Mitte des Rücklaufbodens 22, wo das darüber liegende Sieb 20 allenfalls schwach geneigt ist. Hinzu kommt eine Rechts-Links-Ungleichverteilung des herabfallenden Ernteguts, die durch die Drehung des Axialrotors 18 und das Dreschverhalten des Ernteguts verursacht ist.

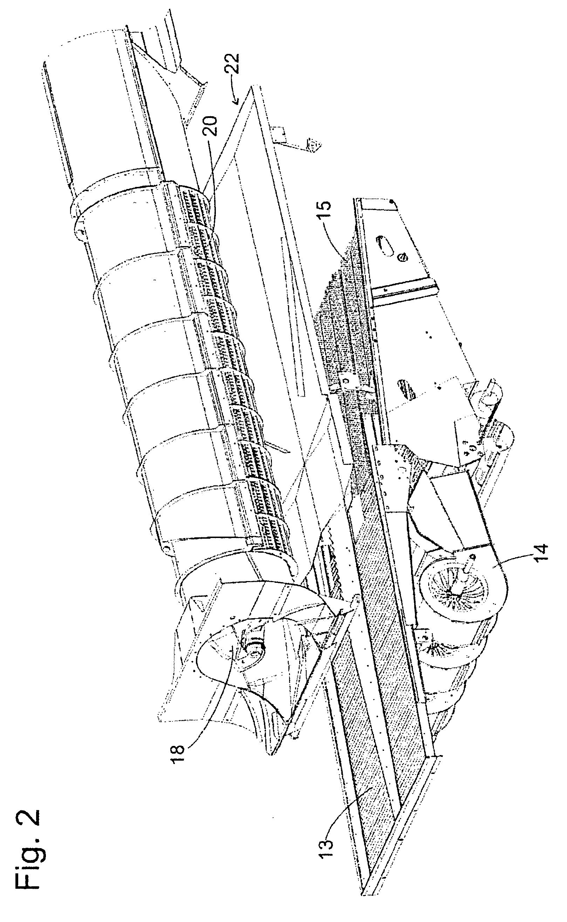

Fig. 2 zeigt in einer perspektivischen Ansicht einen Teil der inneren Einbauten des Mähdreschers 1, namentlich den Axialrotor 18 und das ihn umgebende Sieb 20, den Rücklaufboden 22, den gerippten Vorbereitungsboden 13, das unter dem Vorbereitungsboden 13 untergebrachte Gebläse 14 sowie das Obersieb 15.

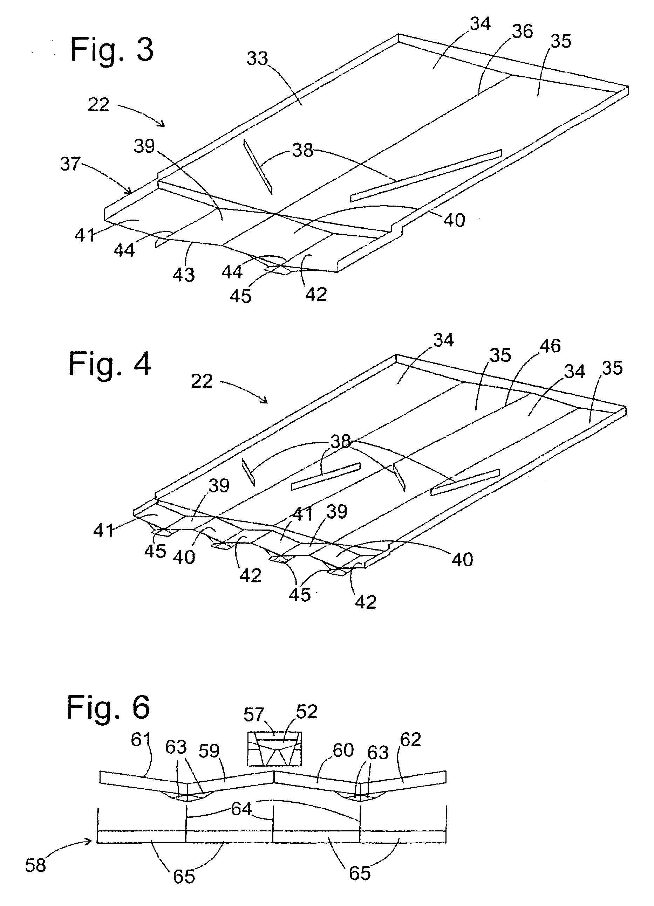

Die Oberfläche des Rücklaufbodens 22 ist strukturiert, um im Laufe des Transports des Ernteguts auf dem Rücklaufboden 22 dessen Verteilung in Breitenrichtung zu vergleichmäßigen. Ein erstes Ausführungsbeispiel dieser Strukturen wird anhand von Fig. 3 erläutert, die den Rücklaufboden 22 der Fig. 2 isoliert in einer perspektivischen Ansicht schräg von vorne zeigt. Ein stromaufwärtiger, in der Perspektive der Fig. 3 hinterer Abschnitt 33 des Rücklaufbodens 22 umfasst zwei im Wesentlichen ebene, nach vorn und zueinander hin leicht abschüssige Oberflächenbereiche 34, 35, die einander an einer Knicklinie 36 in stumpfem Winkel berühren. Die Knicklinie 36 erstreckt sich unter der Achse des Rotors 18. Erntegut, das aufgrund der Form des Rotors 18 in Randnähe des Rücklaufbodens 22 dichter als in der Umgebung der Knicklinie 36 fällt, strebt, durch eine Rüttelbewegung des Rücklaufbodens 22 angetrieben, der Knicklinie 36 sowie einem stromabwärtigen bzw. vorderen Abschnitt 37 zu.

Auf den Oberflächenbereichen 34, 35 in etwa in Richtung des Höhengradienten orientierte Rippen 38 bündeln den Strom des Ernteguts auf etwa ein Viertel bis ein Drittel der Breite des Rücklaufbodens 22. Der so gebündelte Strom trifft im stromabwärtigen Abschnitt 37 auf nach vorn und voneinander fort abschüssige Oberflächenbereiche 39, 40, auf denen der Strom sich teilt und nach rechts und links auseinander strebt. Die Oberflächenbereiche 39, 40 stoßen aneinander in geradliniger Verlängerung der Knicklinie 36. Die Neigung in seitlicher Richtung ist bei den Oberflächenbereichen 39, 40 stärker als bei den Bereichen 34, 35, um eine starke Divergenz der Teilströme auch bei geringer Ausdehnung des stromabwärtigen Abschnitts 37 in der Längsrichtung des Mähdreschers 1 zu erreichen.

An die Oberflächenbereiche 39, 40 rechts und links anschließende, nach vorn und zueinander hin abschüssige Oberflächenbereiche 41, 42 lenken auf sie oder auf stromabwärts der Rippen 38 liegende Teile der Oberflächenbereiche 34, 35 gefallenes Erntegut zur Mitte hin ab.

Länge und Gefälle der Oberflächenbereiche 39 bis 42 sind vorzugsweise so aneinander angepasst, dass an einer vorderen Kante 43 des Rücklaufbodens 22 eine gleichmäßige Verteilung des Korns über die gesamte Breite des Rücklaufbodens 22 hinweg erzielt wird.

Eine zu starke Verdichtung des Kornstroms in Höhe einer Knicklinie 44 zwischen den aneinander angrenzenden Oberflächenbereichen 39, 41 bzw. 40, 42 kann, wenn nötig, verhindert werden, in dem in Verlängerung dieser Knicklinien 44 jeweils ein dachartiger Vorsprung 45 über die Kante 43 übersteht.

Es ist nicht unbedingt erforderlich, den Erntegutstrom im stromaufwärtigen Abschnitt 33 an einer einzigen Stelle zu bündeln, sondern es können auch im Abschnitt 33 zwei parallele Teilströme erzeugt und im stromabwärtigen Abschnitt 37 wieder aufgeweitet werden, sofern konstruktiv sichergestellt werden kann, dass die Durchsätze beider Teilströme proportional zur Breite des Abschnitts der vorderen Kante sind, über den hinweg sie auf den Vorbereitungsboden 13 fallen. Ein Beispiel hierfür ist der Rücklaufboden 22 in Fig. 4. Bei diesem Rücklaufboden 22 sind die mit Bezug auf Fig. 3 beschriebenen Oberflächenstrukturen zweifach, jeweils rechts und links einer Knicklinie 46, ausgebildet. Die Knicklinie 46 verläuft etwas schräg zur Längsrichtung des Mähdreschers, um unter Berücksichtigung des aus der Drehung des Axialrotors resultierenden Seitwärtsdralls des auf den Rücklaufboden fallenden Korns gleich starke Ströme auf beiden Seiten der Knicklinie 46 zu erhalten, die anschließend auf jeweils eine Hälfte der Vorderkante 43 verteilt auf den (in der Fig. 4 nicht dargestellten) Vorbereitungsboden 13 fallen.

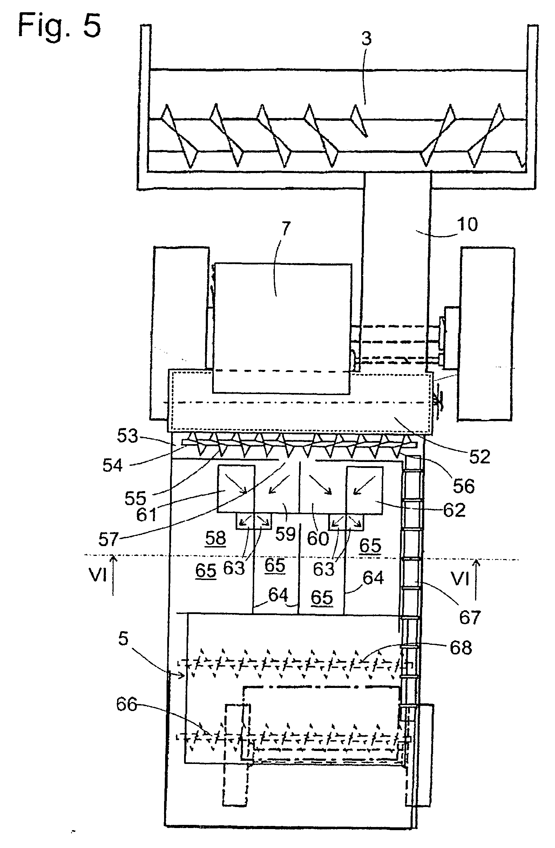

Fig. 5 zeigt teils in Draufsicht, teils in einem stark schematisierten horizontalen Schnitt einen Mähdrescher gemäß einer dritten Ausgestaltung der Erfindung. Von einem Schneidwerk 3 verläuft ein Schrägförderorgan 10 außermittig, rechts von einer Fahrerkanzel 7, zu einem Dresch-Trennrotor 52, der mit in Querrichtung des Mähdreschers orientierter Drehachse hinter und teilweise unter der Fahrerkanzel 7 untergebracht ist. Erntegut wird durch das Schrägförderorgan 10 in den Dresch-Trennrotor 52 an dessen rechtem Ende eingespeist und durchläuft den Dresch-Trennrotor 52 bis zu einer Auswurföffnung am linken Ende. Der Dresch-Trennrotor 52 vereinigt in sich die Funktionen der Dreschtrommel und des Axialrotors 18 des Mähdreschers der Fig. 1. Ein Erntegutstrom, der durch Öffnungen eines des Dresch-Trennrotor 52 umgebenden Korbes in dessen Längsrichtung verteilt austritt und der im Wesentlichen aus Korn, Kurzstroh und Ährenbruchstücken besteht, gelangt in einen zu dem Dresch-Trennrotor 52 parallel verlaufenden Auswurfkanal 53, an dessen Boden eine Schnecke 54 rotiert.

Die Zusammensetzung des austretenden Materialstroms ist über die Länge des Dresch-Trennrotors 52 hinweg nicht konstant. Der Anteil an Nichtkornbestandteilen nimmt mit Fortschreiten des Dreschvorgangs, von rechts nach links in Fig. 5, zu. Die Schnecke 54 umfasst zwei Abschnitte 55, 56 mit jeweils gegenläufiger Gewindesteigung, durch deren Drehung das aus dem Dresch-Trennrotor 52 ausgetretene Material zur Mitte des Mähdreschers hin zusammen geschoben wird. Ein Ausgang 57 des Kanals 53 befindet sich in Höhe der Grenze zwischen den zwei Abschnitten 55, 56.

Der durch die Rührwirkung der Schnecke 54 in seiner Zusammensetzung homogenisierte Materialstrom gelangt über den Ausgang 57 auf einen Vorbereitungsboden 58, der - wie der Rücklaufboden bei den zuvor betrachteten Ausgestaltungen - diverse gegeneinander geneigte Oberflächenbereiche 59 bis 62 aufweist. Der Ausgang 57 mündet auf zwei dieser Bereiche, 59, 60, die, wie durch eingezeichnete Pfeile angedeutet, zu den Seiten und nach hinten abschüssig sind, um den sich darauf ergießenden Materialstrom zu den Seiten hin aufzuweiten bzw. ihn in zwei Teilströme aufzutrennen. Die Bereiche 59, 60 seitlich flankierende und - wie ebenfalls durch eingezeichnete Pfeile angedeutet - zur Fahrzeugmitte und nach hinten hin abschüssige Oberflächenbereiche 61, 62 begrenzen die Auseinanderbewegung der zwei Teilströme und lenken sie auf sich anschließende Paare von dachartig aneinander stoßenden Platten 63, an denen sich die Teilströme erneut verzweigen. Es werden so vier gleich starke Teilströme erhalten, die sich von den Platten 63 auf jeweils einen von vier parallelen, durch drei vertikal aufragende Rippen 64 voneinander getrennten Streifen 65 des Vorbereitungsbodens 58 ergießen.

Die Neigung der Oberflächenbereiche 59 bis 62 und des Vorbereitungsbodens 58 ist verdeutlicht in Fig. 6, die einen partiellen Schnitt durch den Mähdrescher entlang der in Fig. 5 mit VI-VI bezeichneten Ebene zeigt. Man erkennt den Ausgang 57 in einer Wand des Kanals 53 und ein Stück der dahinter liegenden Schnecke 52. Die Oberflächenbereiche 59 bis 62 bilden einen W-förmigen Querschnitt und sind wie die Streifen 65 des Vorbereitungsbodens 58 zum Betrachter hin abschüssig.

Der Vorbereitungsboden 58 ist rüttelnd angetrieben, um das darauf liegende Material einer an sich bekannten Reinigungseinrichtung 5 im Heck des Mähdreschers zuzuführen. Die Rüttelbewegung führt auch zu einer Vergleichmäßigung der Verteilung des Materials über die Breite jedes einzelnen Streifens 65 hinweg, so dass an einer rückwärtigen Kante des Vorbereitungsbodens 58, von der das Material auf ein Obersieb der Reinigungseinrichtung 5 fällt, sowohl die Verteilung des Materialstroms über die Länge der Kante hinweg als auch der Nichtkornanteil im Materialstrom homogen sind.

Die Reinigungseinrichtung 5 kann einen Aufbau ähnlich dem in Fig. 1 und 2 gezeigten haben, mit einem unter dem Vorbereitungsboden 58 angebrachten Gebläse und von diesem angeströmten Sieben.

Material, welches die Siebe der Reinigungseinrichtung 5 nicht passiert und an deren hinterer Kante herabfällt, gelangt zu einer unter den Sieben angeordneten Überkehr-Förderschnecke 66 und über diese und einen daran angeschlossenen Überkehr-Elevator 67 in den Kanal 53 zurück.

Korn, welches die Siebe passiert hat, erreicht eine unter den Sieben angeordnete Kornförderschnecke 68 und gelangt über einen nicht dargestellten Kornelevator in einen in der Figur nicht dargestellten Korntank oberhalb des Vorbereitungsbodens 58.

### Bezugszeichen

- 1.: Mähdrescher
- 2.:
- 3.: Schneidwerk
- 4.: Dreschorgane
- 5.: Reinigungseinrichtung
- 6.: Korntank
- 7.: Fahrerkanzel
- 8.: Verteiler
- 9.: Erntegut
- 10.: Schrägförderorgan
- 11.: Dreschtrommel
- 12.: Dreschkorb
- 13.: Vorbereitungsboden
- 14.: Gebläse
- 15.: Obersieb
- 16.: Untersieb
- 17.: Wendetrommel
- 18.: Axialrotor
- 19.: Boden
- 20.: Sieb
- 21.: Schnecke
- 22.: Rücklaufnoden
- 23.: Schneckenfördereinrichtung
- 24.: Elevator
- 25.: rückwärtiges Ende
- 27.: Elevator
- 28.: Häcksler
- 33.: Abschnitt
- 34.: Oberflächenbereiche
- 35.: Oberflächenbereiche
- 36.: Knicklinie
- 37.: Abschnitt
- 38.: Rippe
- 39.: Oberflächenbereich
- 40.: Oberflächenbereich
- 41.: Oberflächenbereich
- 42.: Oberflächenbereich
- 43.: Kante
- 44.: Knicklinie
- 45.: Vorsprung
- 46.: Knicklinie
- 47.:
- 48.:
- 49.:
- 52.: Dresch-Trennrotor
- 53.: Kanal
- 54.: Schnecke
- 55.: Abschnitt
- 56.: Abschnitt
- 57.: Ausgang
- 58.: Vorbereitungsboden
- 59.: Oberflächenbereich
- 60.: Oberflächenbereich
- 61.: Oberflächenbereich
- 62.: Oberflächenbereich
- 63.: Platte
- 64.: Rippe
- 65.: Streifen
- 66.: Überkehr-Förderschnecke
- 67.: Überkehr-Elevator
- 68.: Kornförderschnecke

## Patentansprüche

1. Mähdrescher mit einem einer Reinigungseinrichtung (5) vorgelagerten Förderboden (22, 58) für Erntegut, der eine einen Strom des Ernteguts quer zu einer mittleren Förderrichtung des Ernteguts auf dem Förderboden (22, 58) auseinander lenkende Oberflächenstruktur (39, 40; 45; 59, 60) aufweist, **dadurch gekennzeichnet, dass** auf dem Förderboden (22, 58) Mittel (34, 35; 38; 54, 57) zum Bündeln des auf die auseinander lenkende Oberflächenstruktur (39, 40; 45; 59, 60) geführten Stroms auf einen Bruchteil der Breite der auseinander lenkenden Oberflächenstruktur (39, 40; 45; 59, 60) stromaufwärts von der Oberflächenstruktur (39, 40; 45; 59, 60) vorgesehen sind. Mähdrescher nach einem der vorhergehenden

2. Mähdrescher nach Anspruch 1, **dadurch gekennzeichnet, dass** die Mittel (34, 35; 38) zum Bündeln in einem bezogen auf die mittlere Förderrichtung des Ernteguts stromaufwärtigen Abschnitt (33) des Förderbodens (22) vorgesehen sind und dass die auseinander lenkende Oberflächenstruktur (39, 40; 45) auf einem stromabwärtigen Abschnitt (37) des Förderbodens (22) angeordnet ist.

3. Mähdrescher nach Anspruch 2, **dadurch gekennzeichnet, dass** die Mittel zum Bündeln in Förderrichtung konvergierende Rippen (38) umfassen.

4. Mähdrescher nach Anspruch 2 oder 3, **dadurch gekennzeichnet, dass** die die Mittel zum Bündeln zwei zur Mitte (36) des Förderbodens (22) abschüssige erste Oberflächenbereiche (34, 35) des stromaufwärtigen Abschnitts (33) umfassen.

5. Mähdrescher nach Anspruch 1, **dadurch gekennzeichnet, dass** die Mittel zum Bündeln eine quer zu der mittleren Förderrichtung ausgerichtete Schnecke (54) umfassen.

6. Mähdrescher nach Anspruch 5, **dadurch gekennzeichnet, dass** die Schnecke (54) zwei Abschnitte (55, 56) mit jeweils gegenläufiger Steigung aufweist.

7. Mähdrescher nach Anspruch 5 oder 6, **dadurch gekennzeichnet, dass** die Schnecke (54) parallel zu einem Rotor (52) ausgerichtet ist, der das von der Schnecke (54) zusammenzuführende Material aus einem Erntegutstrom abscheidet.

8. Mähdrescher nach einem der vorhergehenden Ansprüche, **dadurch gekennzeichnet, dass** die auseinander lenkende Oberflächenstruktur (39, 40; 45; 59, 60) zwei von der Mitte des Förderbodens fort abschüssige zweite Oberflächenbereiche (39, 40; 59, 60) umfasst.

9. Mähdrescher nach,Anspruch 4 und Anspruch 8, **dadurch gekennzeichnet, dass** die zwei zweiten Oberflächenbereiche (39, 40) quer zur Förderrichtung stärker geneigt sind als die zwei Oberflächenbereiche (34, 35) des stromaufwärtigen Abschnitts (33).

10. Mähdrescher nach Anspruch 8 oder 9, **dadurch gekennzeichnet, dass** die zwei zweiten Oberflächenbereiche (39, 40; 59, 60) flankiert sind von zu der Mitte des Förderbodens (22; 58) hin abschüssigen dritten Oberflächenbereichen (41, 42; 61, 62).

11. Mähdrescher nach Anspruch 10, **dadurch gekennzeichnet, dass** an einem stromabwärtigen Rand des Förderbodens (22, 58) wenigstens ein Vorsprung (45) in Verlängerung einer Grenze (44) zwischen zwei zueinander hin abschüssigen Oberflächenbereichen (39, 41; 40, 42) vorgesehen ist.

12. Mähdrescher nach einem der vorhergehenden Ansprüche, **dadurch gekennzeichnet, dass** die auseinander lenkende Oberflächenstruktur (39, 40; 45; 59, 60) mehrere stromteilende Unterstrukturen (39, 40; 45) umfasst, von denen eine erste (39, 40) den gebündelten Strom in Teilströme aufteilt und jede weitere (45) einen ihr zugeführten Teilstrom aufteilt.

13. Mähdrescher nach einem der vorhergehenden Ansprüche, **dadurch gekennzeichnet, dass** der Förderboden ein Rücklaufboden (22) oder ein Vorbereitungsboden (58) ist.

## Claims

1. A combine harvester comprising a conveyor floor (22, 58) for crop material, which is disposed upstream of a cleaning device (5) and which has a surface structure (39, 40; 45; 59, 60) for deflecting apart a flow of the crop material transversely relative to a mean conveyor direction of the crop material on the conveyor floor (22, 58), **characterised in that** provided on the conveyor floor (22, 58) are means (34, 35; 38; 54, 57) for concentrating the flow guided on to the apart-deflecting surface structure (39, 40; 45; 59, 60) on to a fraction of the width of the apart-deflecting surface structure (39, 40; 45; 59, 60) upstream of the surface structure (39, 40; 45; 59, 60).

2. A combine harvester according to claim 1 **characterised in that** the concentrating means (34, 35; 38) are provided in a portion (33) of the conveyor floor (22), that is disposed upstream in relation to the mean conveyor direction of the crop material, and that the apart-deflecting surface structure (39, 40; 45) is arranged on a downstream portion (37) of the conveyor floor (22).

3. A combine harvester according to claim 2 **characterised in that** the concentrating means include ribs (38) converging in the conveyor direction.

4. A combine harvester according to claim 2 or claim 3 **characterised in that** the concentrating means include two first surface regions (34, 35) of the upstream portion (33), that are sloping relative to the centre (36) of the conveyor floor (22).

5. A combine harvester according to claim 1 **characterised in that** the concentrating means include a screw (54) oriented transversely relative to the mean conveyor direction.

6. A combine harvester according to claim 5 **characterised in that** the screw (54) has two portions (55, 66) of respectively opposite pitch.

7. A combine harvester according to claim 5 or claim 6 **characterised in that** the screw (54) is oriented parallel to a rotor (52) which cuts off the material brought together by the screw (54) from a flow of crop material.

8. A combine harvester according to one of the preceding claims **characterised in that** the apart-deflecting surface structure (39, 40; 45; 59, 60) includes two second surface regions (39, 40; 59, 60) which are sloping from the centre of the conveyor floor.

9. A combine harvester according to claim 4 and claim 8 **characterised in that** the two second surface regions (39, 40) are inclined transversely relative to the conveyor direction more greatly than the two surface regions (34, 35) of the upstream portion (33).

10. A combine harvester according to claim 8 or claim 9 **characterised in that** the two second surface regions (39, 40; 59, 60) are flanked by third surface regions (41, 42; 61, 62) which are sloping towards the centre of the conveyor floor (22; 58).

11. A combine harvester according to claim 10 **characterised in that** provided at a downstream edge of the conveyor floor (22, 58) is at least one projection (45) extending a boundary (44) between two surface regions (39, 41;, 40, 42) which slope towards each other.

12. A combine harvester according to one of the preceding claims **characterised in that** the apart-deflecting surface structure (39, 40; 45; 59, 60) includes a plurality of flow-dividing substructures (39, 40; 45) of which a first (39, 40) divides the concentrated flow into flow portions and each further one (45) divides a partial flow fed to it.

13. A combine harvester according to one of the preceding claims **characterised in that** the conveyor floor is a return floor (22) or a preparation floor (58).

## Revendications

1. Moissonneuse-batteuse comportant en amont d'un dispositif de nettoyage (5) un fond de transport (22, 58) pour un produit de récolte, lequel présente une structure superficielle (39, 40 ; 45 ; 59, 60) qui disperse un flux de produit de récolte transversalement à une direction moyenne de transport du produit de récolte sur le fond de transport (22, 58), **caractérisée en ce que** des moyens (34, 35 ; 38 ; 54, 57) pour concentrer le flux guidé vers la structure superficielle dispersante (39, 40 ; 45 ; 59, 60) sur une fraction de la largeur de la structure superficielle dispersante (39, 40 ; 45 ; 59, 60) sont prévus sur le fond de transport (22, 58) en amont de la structure superficielle (39, 40 ; 45 ; 59, 60).

2. Moissonneuse-batteuse selon la revendication 1, **caractérisée en ce que** les moyens de concentration (34, 35 ; 38) sont prévus dans une section (33) du fond de transport (22) qui est située en amont par rapport à la direction moyenne de transport du produit de récolte, et **en ce que** la structure superficielle dispersante (39, 40 ; 45) est disposée sur une section (37) du fond de transport (22) située en aval.

3. Moissonneuse-batteuse selon la revendication 2, **caractérisée en ce que** les moyens de concentration comprennent des nervures (38) qui convergent dans la direction de transport.

4. Moissonneuse-batteuse selon la revendication 2 ou 3, **caractérisée en ce que** les moyens de concentration comprennent deux premières zones superficielles (34, 35) de la section amont (33) qui sont en pente vers le centre (36) du fond de transport (22).

5. Moissonneuse-batteuse selon la revendication 1, **caractérisée en ce que** les moyens de concentration comprennent une vis sans fin (54) orientée transversalement à la direction moyenne de transport.

6. Moissonneuse-batteuse selon la revendication 5, **caractérisée en ce que** la vis sans fin (54) présente deux sections (55, 56) avec des pas de vis en sens contraire.

7. Moissonneuse-batteuse selon la revendication 5 ou 6, **caractérisée en ce que** la vis sans fin (54) est orientée parallèlement à un rotor (52) qui sépare la matière à rassembler par la vis sans fin (54) d'un flux de produit de récolte.

8. Moissonneuse-batteuse selon une des revendications précédentes, **caractérisée en ce que** la structure superficielle dispersante (39, 40 ; 45 ; 59, 60) comprend deux deuxièmes zones superficielles (39, 40 ; 59, 60) en pente à partir du centre du fond de transport.

9. Moissonneuse-batteuse selon la revendication 4 et la revendication 8, **caractérisée en ce que** les deux deuxièmes zones superficielles (39, 40) sont plus fortement inclinées transversalement à la direction de transport que les deux zones superficielles (34, 35) de la section amont (33).

10. Moissonneuse-batteuse selon la revendication 8 ou 9, **caractérisée en ce que** les deux deuxièmes zones superficielles (39, 40 ; 59, 60) sont flanquées par des troisièmes zones superficielles (41, 42 ; 61, 62) en pente vers le centre du fond de transport (22 ; 58).

11. Moissonneuse-batteuse selon la revendication 10, **caractérisée en ce que**, sur un bord aval du fond de transport (22, 58), au moins une saillie (45) est prévue dans le prolongement d'une limite (44) entre deux zones superficielles (39, 41 ; 40, 42) en pente l'une vers l'autre.

12. Moissonneuse-batteuse selon une des revendications précédentes, **caractérisée en ce que** la structure superficielle dispersante (39, 40 ; 45 ; 59, 60) comprend plusieurs sous-structures diviseuses de flux (39, 40 ; 45), dont une première (39, 40) divise le flux concentré en flux partiels et chacune des suivantes (45) divise un flux partiel qui lui est amené.

13. Moissonneuse-batteuse selon une des revendications précédentes, **caractérisée en ce que** le fond de transport est un fond de retour (22) ou un fond de préparation (58).
